# EUROPEAN PATENT APPLICATION

(11) **EP 1 118 420 A2**
(43) Date of publication of application: **25.07.2001**
(21) Application number: 00125895.3
(22) Date of filing: 27.11.2000
(51) Int. Cl.: B23K 26/24, B23K 26/32

(54) **Inclined beam lap welding**

(30) Priority: 26.11.1999 US 167609 P
(71) Applicant: Powerlasers Ltd., Hamilton, Ontario L8N 3J5 (CA)
(72) Inventor: Gu, Hongping, Waterloo Ontario N2T 2J4 (CA)
(74) Representative: Flaccus, Rolf-Dieter, Dr.

(57) **Abstract**

A method of laser welding adjacent surfaces of a pair of components to one another. A laser beam impinges upon an exposed surface of one of the components to create a weld zone between the adjacent surfaces. The beam is moved relative to the components to form a weld. The beam is inclined at an acute angle in the direction of movement of the beam so as to provide an inclined front to the weld zone extending through the components to permit gaseous products formed in said weld zone to move along the front and vent to atmosphere . The preferred angle of inclination is between 75° and 55°.

## Description

The present invention relates to laser welding.

Lasers are used at present to weld sheet material to produce a smooth weld of high integrity and a minimum of distortion. These welding techniques are particularly useful in the automotive industry where surface finish is an important factor.

Much of the steel used in the automotive industry is coated, typically a zinc coating, to inhibit corrosion of the steel in use. The zinc coating of the steel vaporizes when subject to the heating caused by impingement of the laser beam due to the lower melting point of the zinc compared with the steel. The vapor generated tends to deteriorate the quality of the weld by ejecting weld material from the joint and leaving voids.

This problem is particularly pronounced with lap welds in which the two sheets of material overlap one another and the weld is formed in the overlapping portions. In this arrangement, a pair of zinc coated surfaces abut causing a build up of vapor at the interface between the two sheets of material.

Some attempts have been made to overcome this by spacing the sheets of material from one another to give a vent path for the vapor. Whilst this is successful it does require the use of an additional manufacturing process either to place spacers between the sheets or to physically form spacers on the sheets to hold the abutting surfaces slightly apart.

It is therefore an object of the present invention to provide a method and apparatus for welding in which the above disadvantages are obviated or migrated.

In general terms the present invention provides a method of laser welding a pair of abutting components by inclining the laser beam to the surface of one of the components in the direction of travel of the beam.

Preferably the beam is inclined at an angle of between 55 and 70 degrees more preferably between 60 and 70 degrees and preferably the focus of the beam is maintained in a region within 0.5 millimeters of the lower face of the components.

The present invention also contemplates a welding apparatus having a laser head to generate a laser beam to impinge upon a surface of components to be welded. The laser head is positioned to provide a beam inclined at an acute angle to the surface of the component in the direction of travel of the beam.

Preferably, a control system monitors the location of the impingement of the beam on the surface and adjusts the position of the beam to maintain a focal point within 0.5 millimeters of the lower surface of the beam.

An embodiment of the invention will now be described by way of example only with reference to the accompanying drawings in which: -

Figure 1 is a schematic representation of a laser welding apparatus.

Figure 2 is an end view of the laser welding apparatus of figure 1.

Figure 3 is an enlarged view of the weld zone shown in figure 1.

Figure 4 is a reproduction of upper and lower surfaces of a weld performed with the beam at 90° to the surface.

Figure 5 is a view similar to figure 4 with a beam at 75° to the surface.

Figure 6 is a view similar to figure 4 with a beam at 70° to the surface.

Figure 7 is a view similar to figure 4 with a beam at 65° to the surface.

Figure 8 is a view similar to figure 4 with a beam at 60° to the surface.

Figure 9 is a view similar to figure 4 with a beam at 55° to the surface.

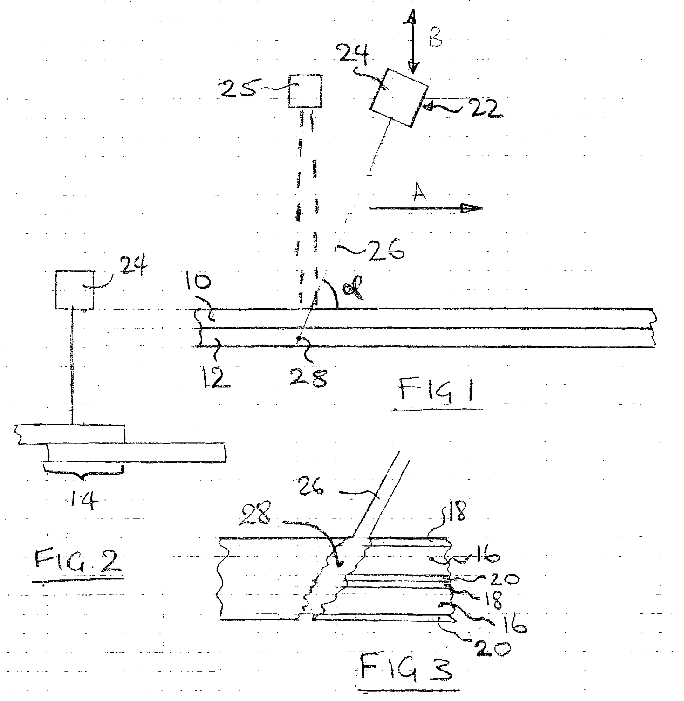

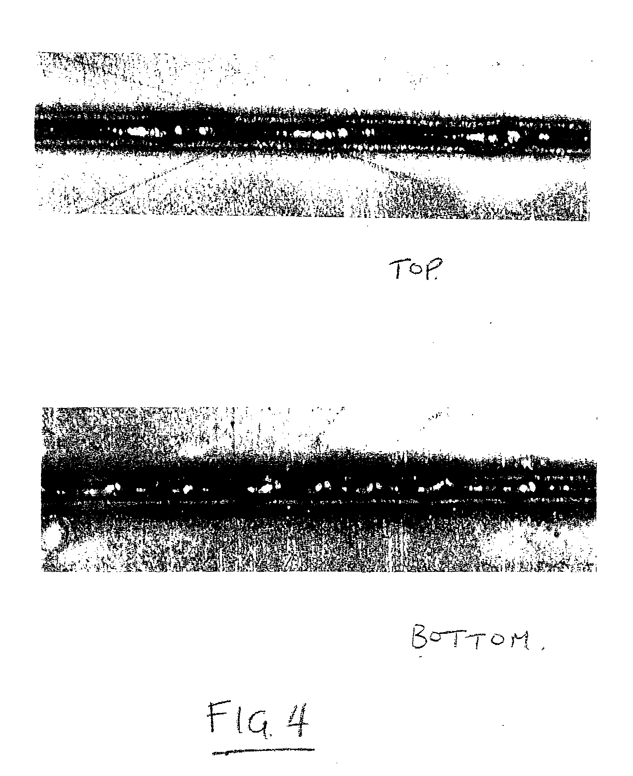

Referring therefore to Figure 1, a pair of sheet metal components 10, 12 overlap in a weld zone indicated at 14. Each of the sheet material has a steel core 16 with a galvanized coating 18, 20 on opposite faces of the core. In the weld zone 14, a pair of zinc coatings 20 abut as can be seen in figure 3.

A laser welding system 22 includes a laser head 24 and a control system 25. The head 24 is mounted on a support system, typically a set of slides and associated drive motors, to move relative to the components 10, 12 in the direction generally parallel to the planar surfaces of the components 10,12 as indicated in arrow A at a controlled rate and can be adjusted 12 in a direction generally normal to the planar surfaces of the components 10,12 as indicated by the arrow B. The laser head 24 produces a coherent beam of radiation 26 that impinges on the upper surface of the weld zone 14. The point of impingement is monitored by the control 25 that adjusts the vertical position of the head 24 to maintain the focus 28 of beam 26 in the lower portion of the component 12. Preferably the focus is maintained within 0.5 millimeters of the downwardly directed face of the component 12.

The head 24 is positioned to cause the beam 26 to impinge upon the surface 18 of components 16 at an acute angle a in the direction of travel of the beam. Thus the head 24 is in advance of the point of impingement as it translates relative to the component 10 in the direction of arrow A. The angle a is between 75° and 55° and preferably between 70° and 60°. As will be seen from figure 2, the beam 26 lies in a plane that is normal to the surface in the direction of travel, although it may be inclined at a small angle if preferred.

The impingement of beam 26 on the upper surface 18 causes the melting of the material along an inclined front of a weld zone 28. The beam 26 melts the material in both sheets between the oppositely directed surfaces to provide a continuous weld through the thickness of the overlapping components 10, 12. As the beam impinges on the upper surface 18, of the component 10 the zinc coating vaporizes and is vented to the atmosphere, as is the zinc coating 20 on the lower surface of the component 12. However the abutting coatings 20, 18 are melted within the interior of the weld zone but it has been found surprisingly that the inclination of the beam and the resultant inclination of the front of the weld zone 28 permits the vapor to be vented downwardly and rearwardly without generating voids in the resultant weld.

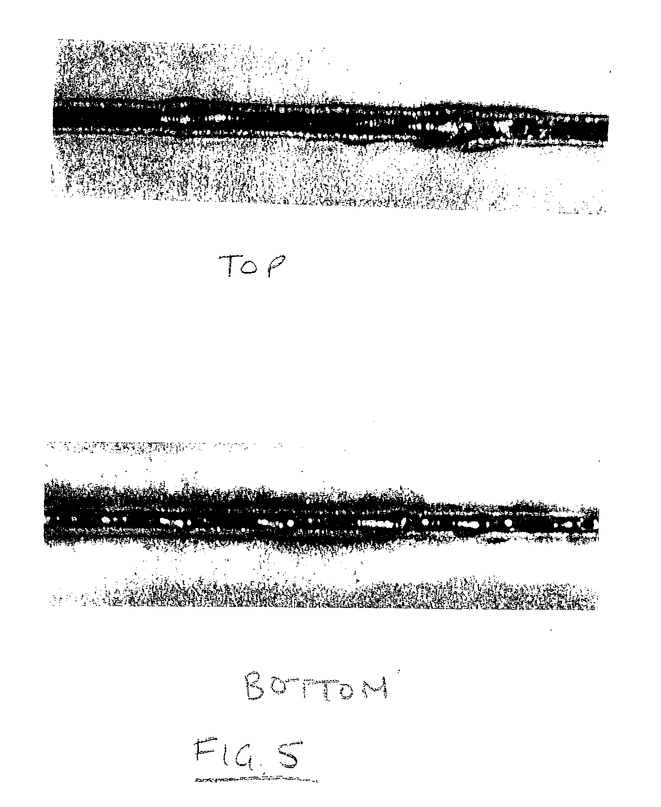

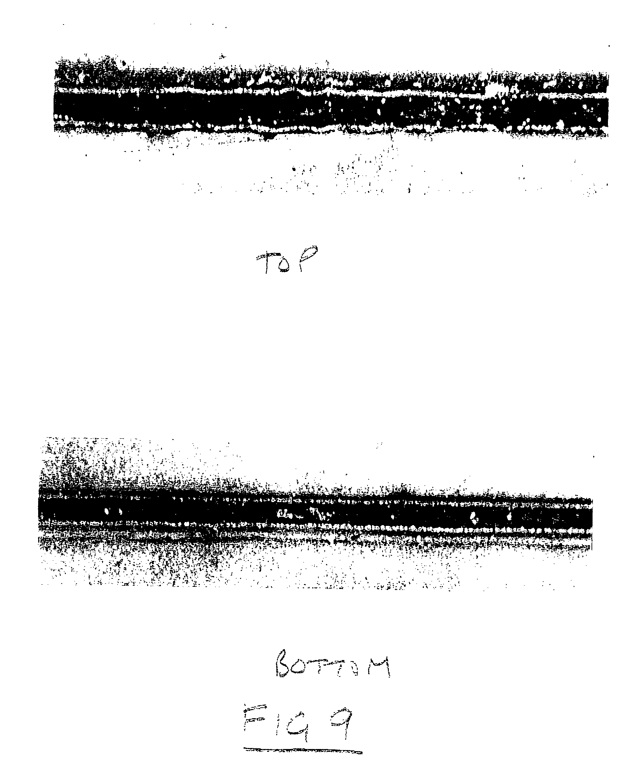

In tests conducted using galvaneal sheets, the upper one 1.2 mm thick and the lower one 0.7 mm thick and without maintaining any gap between the abutting surfaces, satisfactory results were obtained at angles of between 70° and 55°. The laser 24 was a CO₂ laser having a continuous power output of 8 kilowatts. Test welds were conducted at a travel speed of 10 meters per minute and the results of the weld are shown in figures 4 through 9. Referring therefore to figure 4 it will be seen that the weld zone completed with the beam 26 at 90° to the galvanize sheets in the direction of travel produces a relatively rough weld with a significant number of voids along the weld. The weld produced at 75° is also relatively rough and still has a significant number of voids.

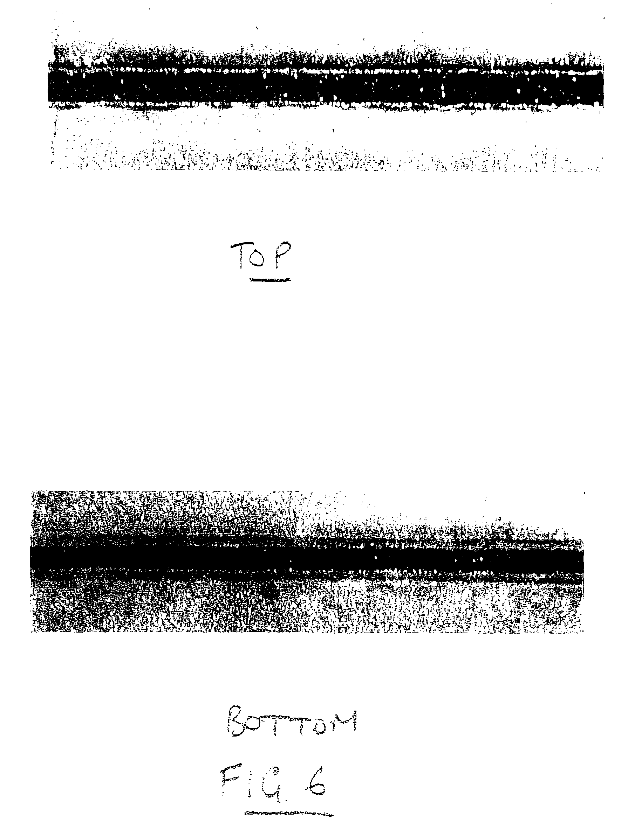

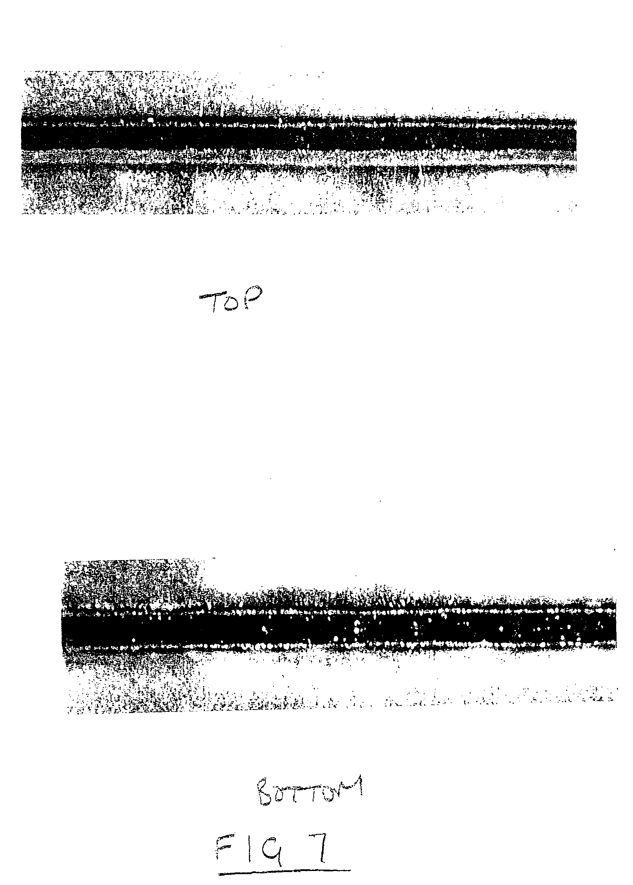

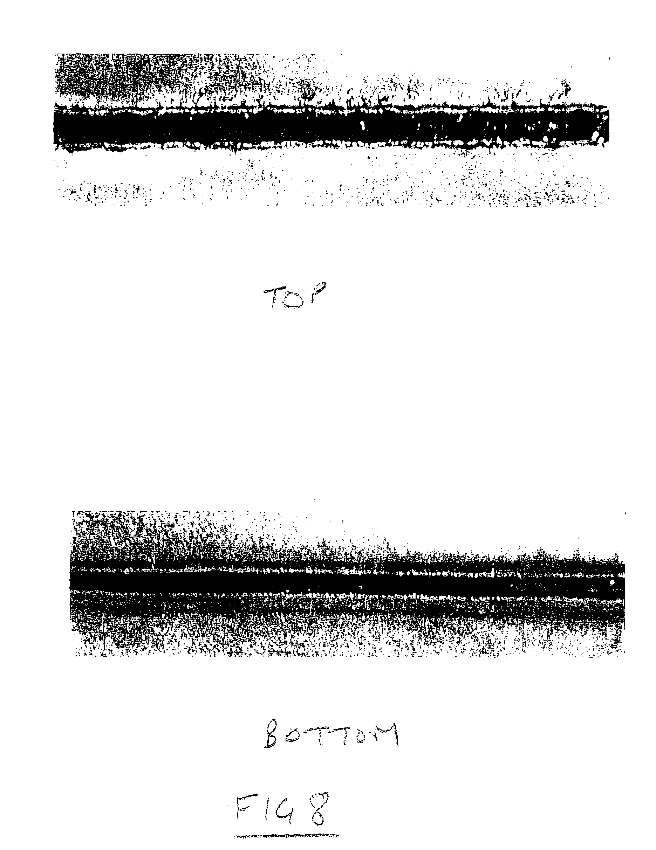

With the inclination at 70° as shown in figure 6, a smooth weld was obtained without voids, similar to that found at 65° shown in figure 7. The weld quality was maintained at 60° as shown in figure 8 and a satisfactory weld obtained at 55° although some deterioration in weld quality can be observed.

Further inclination of the weld beam results in difficulty in maintaining the focal point of the beam at the desired zone within the weld and no improvement in weld quality is observed. Preferably the focal point should be in the lower component 12 and preferably within the lower half of the lower core 16. It has been found that positioning within 1 millimeter of the lower most face 20 of the component 12 and ideally 0.5 millimeters of the lower face produces satisfactory results. As the inclination of the beam 26 increases the position of the focal point is susceptible to variations induced by relative vertical displacement of the head and components as the head travels and adversely affects the weld quality.

To maintain the focal spot in the desired location, the control 25 observes the plume associated with the weld zone and monitors displacement of the plume along the weld path. Any variations in the position of the plume relative to the control 25 are corrected by adjusting the spacing of the head 24 from the components in the direction of the arrow B.

Although described with a total thickness of less than 2 millimeter sheets, the inclined beam may also be used weld joints greater than 2 millimeters although it may be desirable to provide some venting between the sheets at increased thickness. However the degree of venting required is less than that would conventionally be required with a normal i.e. 90° beam impingement. The optimum angle for impingement would increase i.e. approach closer to the vertical with increased thickness of the materials.

The present embodiment has been exemplified with test results from a CO₂ lasers may be used such as a YAG laser.

## Claims

1. A method of laser welding adjacent surfaces of a pair of components to one another by impingement of a laser beam upon an exposed surface of one of said components to create a weld zone between said adjacent surfaces and moving said beam relative to said components, said beam being inclined at an acute angle in the direction of movement of the beam so as to provide an inclined front to said weld zone extending through said components to permit gaseous products formed in said weld zone to move along said front ad vent to atmosphere .

2. A method according to claim 1 wherein said acute angle is less than 75°.

3. A method according to claim 2 wherein said acute angle is greater than 55°.

4. A method according to claim 3 wherein said acute angle is between 70° and 60°.

5. A method according to claim 1 wherein said weld zone passes from said exposed surface of said one component through said adjacent surfaces to an external surface of the other of said components and said beam is focused adjacent said external surface.

6. A method according to claim 5 wherein said beam is focused within 1 millimeter of said external surface.

7. A method according to claim 6 wherein said beam is focused within 0.5 millimeters of said external surface.

8. A method according to claim 1 wherein each of said components has a coating thereon that is vaporized by generation of said weld zone.

9. A method according to claim 8 wherein the distance between said exposed surface and said external surface is less than 2 millimeters.

10. A method according to claim 9 wherein said acute angle is between 75° and 55°.

11. A method of laser welding adjacent surfaces of a pair of components to one another by impingement of a laser beam upon an external surface of one of said components, said method comprising the steps of moving said beam relative to said surface at an acute angle in the direction of movement of 75° or less.

12. A method according to claim 11 wherein said acute angle is between 55° and 75°.

13. A method according to claim 12 wherein said acute angle is between 60° and 70°.

14. A method according to claim 11 wherein said beam is focused adjacent an external surface of the other of said components.

15. A method according to claim 14 wherein said beam is focused within 1 millimeter of said external surface.

16. A method according to claim 15 wherein said beam is focused within 0.5mm of said external surface.

17. A method according to claim 10 wherein each of said components has a coating on said adjacent surfaces.

18. A method according to claim 11 wherein said laser is a CO₂ laser.

19. A method according to claim 11 wherein said components have a combined thickness of less than 2 millimeters.

20. A method according to claim 19 wherein said components are juxtaposed.

21. A laser welding apparatus to weld a pair of components to one another, comprising a welding head for generating a coherent beam of radiation, and a mounting device to permit movement of said head relative to said components, said head being positioned to cause said beam to impinge upon said components at an acute angle measured in the direction of travel of said head.

22. A laser welding device according to claim 21 wherein said acute angle is between 55° and 75°.

23. A laser welding device according to claim 22 wherein said acute angle is between 60° and 70°.

24. A laser welding device according to claim 21 including a control to monitor the welding zone produced by impingement of said beam and adjust the focus of said beam.

25. A laser welding device according to claim 24 wherein said control maintains said focus at a location less than 1 mm from an external surface of said components remote from said head.

26. A laser welding device according to claim 25 wherein said control maintains said focus at a location less than 0.5 mm from said external surface.

27. A laser welding device according to claim 24 wherein said control monitors a plume associated with said weld to control impingement of said beam.
